# EUROPEAN PATENT APPLICATION

(11) **EP 4 481 626 A1**
(43) Date of publication of application: **25.12.2024**
(21) Application number: 23881167.3
(22) Date of filing: 08.05.2023
(51) Int. Cl.: G06N 3/098

(54) **FEDERATED LEARNING METHOD AND APPARATUS**

(30) Priority: 29.10.2022 CN 202211340211
(71) Applicant: Huawei Technologies Co., Ltd., Shenzhen, Guangdong 518129 (CN)
(72) Inventor: SHAO, Yunfeng, Shenzhen, Guangdong 518129 (CN); LI, Bingshuai, Shenzhen, Guangdong 518129 (CN); LU, Jiaxun, Shenzhen, Guangdong 518129 (CN); ZHENG, Zhenzhe, Shanghai 200240 (CN); WU, Fan, Shanghai 200240 (CN); HU, Dahai, Shenzhen, Guangdong 518129 (CN)
(74) Representative: Pfenning, Meinig & Partner mbB
(86) International application number: PCT/CN2023/092742
(87) International publication number: WO 2024/087573

(57) **Abstract**

A federated learning method and an apparatus are provided. The federated learning method includes: A central node separately sends a first model to at least one central edge device, receives at least one second model, and aggregates the at least one second model to obtain a fourth model. The at least one central edge device is in one-to-one correspondence with at least one edge device group. The second model is obtained by aggregating a third model respectively obtained by each edge device in at least one edge device group. The third model is a model obtained by one edge device in collaboration with at least one terminal device in a coverage area through learning the first model based on local data. A plurality of edge devices are grouped into a plurality of edge device groups, and a central edge device in one edge device group sends the first model to each edge device in the edge device group, so that edge devices interacting with the central node are reduced. In this way, model learning can be accelerated by adding edge devices participating in learning, thereby improving federated learning efficiency.

## Description

### CROSS-REFERENCE TO RELATED APPLICATIONS

This application claims priority to Chinese Patent Application No. 202211340211.0, filed with the China National Intellectual Property Administration on October 29, 2022 and entitled "FEDERATED LEARNING METHOD AND APPARATUS", which is incorporated herein by reference in its entirety.

### TECHNICAL FIELD

This application relates to the field of artificial intelligence (artificial intelligence, AI) technologies, and in particular, to a federated learning method and an apparatus.

### BACKGROUND

Federated learning (federated learning, FL) is a type of distributed machine learning (machine learning, ML) and enables joint training of a model by using service data on each terminal device on a premise that data is not shared among different terminal devices.

For typical federated learning, in any round of learning, each terminal device learns a model from a central node based on local service data, to obtain a local learning result. Then, the central node obtains local learning results of a plurality of terminal devices, aggregates models obtained by the plurality of terminal devices through learning, and sends an aggregated model to the terminal devices. Subsequently, the terminal device learns the aggregated model based on the local service data. The rest is deduced by analogy until the learning ends.

The foregoing federated learning depends on the central node. If computing resources or bandwidth resources of the central node are limited, aggregation of a large quantity of models cannot be supported, and the federated learning cannot be implemented.

### SUMMARY

Embodiments of this application provide a federated learning method and an apparatus, to reduce a burden of performing federated learning by a central node, and improve federated learning efficiency.

According to a first aspect, an embodiment of this application provides a federated learning method. The method may be performed by a first communication apparatus. The first communication apparatus may be a communication device or a communication apparatus that can support the communication device to implement functions required for the method, for example, a chip system. For example, the first communication apparatus is a central node, or a chip disposed on the central node, or another component configured to implement a function of the central node. The following describes the federated learning method provided in the first aspect by using an example in which the first communication apparatus is a central node.

The federated learning method includes: A central node separately sends a first model to at least one central edge device, and receives at least one second model. The at least one central edge device is in one-to-one correspondence with at least one edge device group, and one edge device group includes at least one edge device. The second model is obtained by aggregating a third model respectively obtained by each edge device in at least one edge device group. The third model is a model obtained by one edge device in collaboration with at least one terminal device in a coverage area through learning the first model based on local data. Then, the central node aggregates the at least one second model to obtain a fourth model.

In this embodiment of this application, a plurality of edge devices are grouped into a plurality of edge device groups. Any edge device group interacts with the central node by using one of edge devices (that is, the central edge device in this specification). For example, the central node sends, by using a central edge device in an edge device group, the first model to each edge device in the edge device group. To be specific, the central node does not need to interact with a plurality of edge devices separately. In this way, edge devices interacting with the central node are reduced, thereby reducing a load of the central node. Therefore, the edge devices in the edge device group may be added, so that more edge devices participate in learning, thereby accelerating model learning and improving federated learning efficiency.

In a possible implementation, the method further includes: The central node groups a plurality of edge devices participating in learning into the at least one edge device group, and determines a central edge device of each edge device group based on one or more types of the following information: first information, second information, or third information. The first information indicates a communication relationship among the plurality of edge devices, where the communication relationship indicates an edge device that is in the plurality of edge devices and that is able to communicate with each edge device. The second information indicates a communication delay of a communication link of each of the plurality of edge devices. The third information indicates a model similarity among the plurality of edge devices.

This embodiment of this application provides a plurality of grouping manners in which a plurality of edge devices are grouped into at least one edge device group. A specific grouping manner to be used is not limited in embodiments of this application. In this embodiment of this application, a plurality of edge devices may be grouped into at least one edge device group based on an actual model learning requirement. For example, it is simple to group a plurality of edge devices into at least one edge device group based on a communication relationship among a plurality of edge devices. For another example, a plurality of edge devices whose communication delays are short may be grouped into one group, to shorten a communication delay of each edge device in the group, and help shorten a model learning time. For still another example, a plurality of edge devices whose models are similar may be grouped into one group, to help accelerate a convergence time of a model in the group, and improve learning efficiency.

In a possible implementation, that the central node groups a plurality of edge devices participating in learning into the at least one edge device group based on one or more types of the following information includes: The central node groups the plurality of edge devices based on the first information or the second information, to obtain M edge device groups, where M is an integer greater than or equal to 1, and then the central node groups each of the M edge device groups based on the third information, to obtain the at least one edge device group. The plurality of edge devices are grouped into the at least one edge device group in the plurality of grouping manners, to shorten the model learning time as much as possible.

In a possible implementation, the method further includes: The central node sends, for a first edge device in the plurality of edge devices, an obtaining instruction to the first edge device, and receives fourth information from the first edge device. The obtaining instruction is used to instruct the first edge device to report information about an edge device that is able to communicate with the first edge device. The fourth information includes the information about the edge device that is able to communicate with the first edge device. The central node determines the communication relationship among the plurality of edge devices based on fourth information that is separately from the plurality of edge devices. In this solution, the central node may instruct each edge device to report an edge device that is able to communicate with the edge device directly, to determine the communication relationship among the plurality of edge devices, which is not affected by a layout of the plurality of edge devices, and is more flexible.

In a possible implementation, the method further includes: The central node separately reads configuration information from the plurality of edge devices, and determines the communication relationship among the plurality of edge devices based on the read configuration information. Configuration information of one of the plurality of edge devices includes information about another edge device that is able to communicate with the edge device. In this solution, for any edge device, information about another edge device that is able to communicate with the edge device directly may be (pre-configured) configured at the edge device, so that the central node can determine the communication relationship among the plurality of edge devices by reading configuration information of each edge device.

According to a second aspect, an embodiment of this application provides a federated learning method. The method may be performed by a second communication apparatus. The second communication apparatus may be a communication device or a communication apparatus that can support the communication device to implement functions required for the method, for example, a chip system. For example, the second communication apparatus is an edge device, for example, a base station, a chip disposed in the edge device, or another component configured to implement a function of the edge device. The following describes the federated learning method provided in the second aspect by using an example in which the first communication apparatus is a first edge device.

The federated learning method includes: A first edge device receives a first model from a central node, sends the first model to an edge device other than the first edge device in a first edge device group, and sends a second model to the central node. The first edge device is a central edge device in the first edge device group, and the first edge device group includes at least one edge device. The second model is obtained by aggregating a third model respectively obtained by each edge device in at least one edge device group. The at least one edge device group includes the first edge device group. The third model is a model obtained by one edge device in collaboration with at least one terminal device in a coverage area through learning the first model based on local data.

In this embodiment of this application, any edge device group in an edge device group may collaborate with at least one terminal device in a coverage area to learn, based on local data, the first model delivered by the central node, to obtain the third model. A plurality of third models in one or more edge device groups may be aggregated and reported to the central node by using one central edge device, so that edge devices interacting with the central node are reduced, thereby reducing a load of the central node. Therefore, the edge devices in the edge device group may be added, so that more edge devices participate in learning, thereby accelerating model learning and improving federated learning efficiency.

In a possible implementation, the method further includes: The first edge device receives at least one third model, and aggregates the at least one third model with a third model that is obtained by the first edge device in collaboration with at least one terminal device covered by the first edge device through learning the first model based on local data, to obtain the second model. One of the at least one third model comes from a second edge device in the first edge device group. Alternatively, one of the at least one third model comes from a first terminal device. The first terminal device is a terminal device that moves from a coverage area of an edge device in a second edge device group to a coverage area of the first edge device.

In a possible implementation, the method further includes: The first edge device receives an obtaining instruction sent by the central node, and sends fourth information to the central node. The obtaining instruction is used to instruct the first edge device to report information about an edge device that is able to communicate with the first edge device. The fourth information includes the information about the edge device that is able to communicate with the first edge device.

For technical effect brought by the second aspect or the possible implementations of the second aspect, refer to the descriptions of the technical effect of the first aspect or the possible implementations of the first aspect.

According to a third aspect, an embodiment of this application provides a federated learning method. The method may be performed by a third communication apparatus. The second communication apparatus may be a communication device or a communication apparatus that can support the communication device to implement functions required for the method, for example, a chip system. For example, the third communication apparatus is a terminal device, a chip disposed in a terminal device, or another component configured to implement a function of a terminal device. The following describes the federated learning method provided in the third aspect by using an example in which the first communication apparatus is a terminal device.

The federated learning method includes: A first terminal device receives a third model from a second edge device in a first edge device group, where the first terminal device is located within a coverage area of the second edge device, moves, from the coverage area of the second edge device to a coverage area of a third edge device in a second edge device group, and sends the third model to the third edge device. The third model is a model obtained by the second edge device in collaboration with at least one terminal device in a coverage area through learning a first model from a central node based on local data.

In this embodiment of this application, the terminal device may be used as a transmission medium in two edge device groups. For example, the terminal device may obtain, within the coverage area of the second edge device in the first edge device group, the third model obtained by the second edge device. When the terminal device moves to the coverage area of the third edge device in the second edge device group, the terminal device may send the obtained third model to the third edge device, to implement transfer between model groups.

According to a fourth aspect, an embodiment of this application provides a communication apparatus. The communication apparatus has a function of implementing behavior in the method embodiment of the first aspect. For details, refer to the descriptions of the first aspect. Details are not described herein again. The communication apparatus may be a central node in the first aspect, or the communication apparatus may be an apparatus, for example, a chip or a chip system, that can implement the method provided in the first aspect. Alternatively, the communication apparatus has a function of implementing behavior in the method embodiment of the second aspect. For details, refer to the descriptions of the second aspect. Details are not described herein again. The communication apparatus may be a first edge device in the second aspect, or the communication apparatus may be an apparatus, for example, a chip or a chip system, that can implement the method provided in the second aspect. Alternatively, the communication apparatus has a function of implementing behavior in the method embodiment of the third aspect. For details, refer to the descriptions of the third aspect. Details are not described herein again. The communication apparatus may be a terminal device in the third aspect, or the communication apparatus may be an apparatus, for example, a chip or a chip system, that can implement the method provided in the third aspect.

In a possible design, the communication apparatus includes a corresponding means (means) or module configured to perform the method in the first aspect, the second aspect, or the third aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method example of the first aspect, the second aspect, or the third aspect. For details, refer to the detailed descriptions in the method examples. Details are not described herein again.

According to a fifth aspect, an embodiment of this application provides a communication apparatus. The communication apparatus may be the communication apparatus in the first aspect of the foregoing embodiments, or may be a chip or a chip system disposed in the communication apparatus in the first aspect. Alternatively, the communication apparatus may be the communication apparatus in the second aspect of the foregoing embodiments, or may be a chip or a chip system disposed in the communication apparatus in the second aspect. Alternatively, the communication apparatus may be the communication apparatus in the third aspect in the foregoing embodiments, or may be a chip or a chip system disposed in the communication apparatus in the third aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the central node, the first edge device, or the terminal device in the foregoing method embodiments.

According to a sixth aspect, an embodiment of this application provides a communication apparatus. The communication apparatus includes an input/output interface and a logic circuit. The input/output interface is configured to input and/or output information. The logic circuit is configured to perform the method according to the first aspect, the second aspect, or the third aspect.

According to a seventh aspect, an embodiment of this application provides a chip system. The chip system includes a processor, and may further include a memory and/or a communication interface. The chip system is configured to implement the method according to the first aspect, the second aspect, or the third aspect. In a possible implementation, the chip system further includes the memory, configured to store a computer program. The chip system may include a chip, or may include a chip and another discrete component.

According to an eighth aspect, an embodiment of this application provides a communication system. The communication system includes a central node, at least one edge device, and at least one terminal device. The central node is configured to perform the method performed by the central node in the first aspect, any edge device is configured to perform the method performed by the first edge device in the second aspect, and any terminal device is configured to perform the method performed by the terminal device in the third aspect.

According to a ninth aspect, this application provides a computer-readable storage medium. The computer-readable storage medium stores a computer program. When the computer program is run, the method according to the first aspect, the second aspect, or the third aspect is implemented.

According to a tenth aspect, a computer program product is provided. The computer program product includes computer program code. When the computer program code is run, the method according to the first aspect, the second aspect, or the third aspect is performed.

For beneficial effects of the fourth aspect to the tenth aspect and the implementations of the fourth aspect to the tenth aspect, refer to the descriptions of the beneficial effects of the first aspect to the third aspect and the implementations of the first aspect to the third aspect.

### BRIEF DESCRIPTION OF DRAWINGS

FIG. 1 is a diagram of a federated learning architecture according to an embodiment of this application;
FIG. 2 is a schematic flowchart of federated learning in an architecture shown in FIG. 1;
FIG. 3 is a diagram of another federated learning architecture according to an embodiment of this application;
FIG. 4 is a diagram of a hierarchical federated learning architecture according to an embodiment of this application;
FIG. 5 is a diagram of a federated learning architecture to which an embodiment of this application is applicable;
FIG. 6 is a schematic flowchart of federated learning according to an embodiment of this application;
FIG. 7 is a diagram of natural grouping of a plurality of edge devices according to an embodiment of this application;
FIG. 8 is a diagram of grouping a plurality of edge devices based on communication delays according to an embodiment of this application;
FIG. 9 is a diagram of a communication relationship among a plurality of edge devices according to an embodiment of this application;
FIG. 10 is a schematic block diagram of a communication apparatus according to an embodiment of this application; and
FIG. 11 is another schematic block diagram of a communication apparatus according to an embodiment of this application.

### DESCRIPTION OF EMBODIMENTS

The federated learning method provided in embodiments of this application may be applied to training of a machine learning model in a federated learning scenario. The machine learning model includes, for example, a neural network or another type of machine learning module. To facilitate understanding of the federated learning method provided in embodiments of this application, some concepts or terms in embodiments of this application are first described.
(1) A terminal device, also referred to as a terminal or a terminal apparatus, is a device having a wireless transceiver function, and may send a signal to a network device, or receive a signal from a network device. The terminal device may be user equipment (user equipment, UE), or sometimes may be referred to as a terminal, an access station, a UE station, a remote station, a wireless communication device, a user apparatus, or the like. The terminal device is configured for connecting people, things, machines, and the like, and may be widely used in various scenarios, such as but not limited to the following scenarios: cellular communication, device to device (device to device, D2D), vehicle to everything (vehicle to everything, V2X), machine-to-machine/machine-type communications (machine-to-machine/machine-type communications, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearables, intelligent transportation, a smart city (smart city), uncrewed aerial vehicles, robots, and the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The terminal device may further include a relay (relay). For example, the terminal device may be customer-premises equipment (customer-premises equipment, CPE). The CPE may receive a signal from the network device, and forward the signal to another terminal device. Alternatively, it is understood that any device that can perform data communication with a base station may be considered as the terminal device. If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

The terminal device may alternatively be a vehicle-mounted module, a vehicle-mounted assembly, an onboard component, an automotive chip, or an on board unit that is built in a vehicle as one or more components or units. The vehicle may implement a method in embodiments of this application by using the vehicle-mounted module, the vehicle-mounted assembly, the onboard component, the automotive chip, or the on board unit that is built in the vehicle.

In embodiments of this application, the terminal device may be an apparatus configured to implement a function of the terminal device, or may be an apparatus, for example, a chip system, that can support the terminal device in implementing the function. The apparatus may be installed in the terminal device. For example, the terminal device may alternatively be a vehicle detector. In embodiments of this application, the chip system may include a chip, or may include a chip and another discrete component. In the technical solutions provided in embodiments of this application, descriptions are provided by using an example in which the apparatus configured to implement the function of the terminal device is the terminal device.

(2) A network device, where the network device is an access device through which a terminal device accesses a mobile communication system in a wireless manner. The network device, for example, includes an access network (access network, AN) device such as a base station. The network device may alternatively be a device that communicates with the terminal device over an air interface. The network device may include an evolved NodeB (evolved NodeB) (also referred to as an eNB or an e-NodeB for short) in a long term evolution (long term evolution, LTE) system or a long term evolution-advanced (long term evolution-advanced, LTE-A) system. The network device may also include a next generation NodeB (next generation NodeB, gNB) in a 5th generation (5th generation, 5G) system. Alternatively, the network device may include an access node in a wireless-fidelity (wireless-fidelity, Wi-Fi) system. Alternatively, the network device may be a relay station, a vehicle-mounted device, a future evolved public land mobile network (Public Land Mobile Network, PLMN) device, a device in a D2D network, a device in an M2M network, a device in an IoT network, a network device in a PLMN network, or the like. A specific technology and a specific device form that are used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be another division of protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In the network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling.

In embodiments of this application, an apparatus configured to implement a function of the network device may be the network device, or may be an apparatus, for example, a chip system, that can support the network device in implementing the function. The apparatus may be installed in the network device. In the technical solutions provided in embodiments of this application, descriptions are provided by using an example in which the apparatus configured to implement the function of the network device is the network device.
(3) A central node, also referred to as a central server, a central-side server, or a central-end server, refers to a type of device having a computing capability, for example, may be a personal computer or a cloud server. For example, the central node may be a network management platform.
(4) An edge device (edge device), also referred to as an edge-side device or an edge-end device, refers to a device that provides an entry point of a core network for an enterprise or a service provider, and may also provide network connectivity for an operator or a service provider. For example, the edge device may be a router, a routing switch, an integrated access device (integrated access device, IAD), a multiplexer, and various metropolitan area network (metropolitan area network, MAN) and wide area network (wide area network, WAN) access devices.
(5) Federated learning, also referred to as federated machine learning, joint learning, union learning, or the like, is a type of distributed machine learning and enables joint training of a neural model by using service data on each terminal device on a premise that data is not shared among different terminal devices.

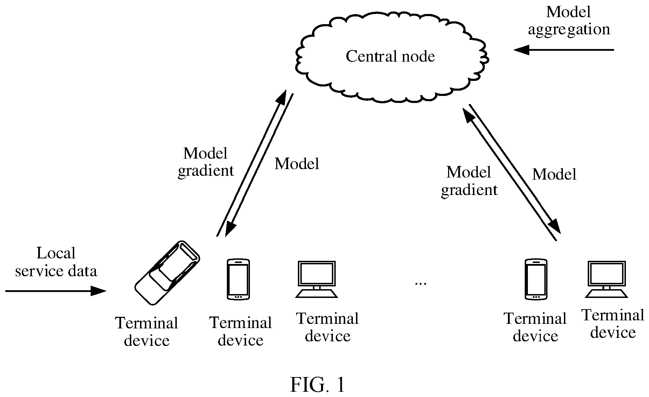

FIG. 1 is a diagram of a federated learning architecture according to an embodiment of this application. In FIG. 1, an example in which one central node and a plurality of terminal devices are included is used, and specific types of the plurality of terminal devices are not limited. For example, the plurality of terminal devices may be one or more of a mobile phone, a computer, or a vehicle-mounted device. A federated learning process mainly includes a local learning (training) model process and a central node aggregating model process. The local training model process refers to that a terminal device learns, based on local service data, a global model from the central node, and uploads, to the central node, a variation (also referred to as a model gradient) of a model parameter generated in a local learning process. The central node aggregating model process refers to that the central node aggregates (also referred to as converge) the global model based on a model gradient from all or some terminal devices. The local learning (training) model process and the central node aggregating model process are repeatedly iterated until the model converges or a preset quantity of learning times is reached, and the learning ends.

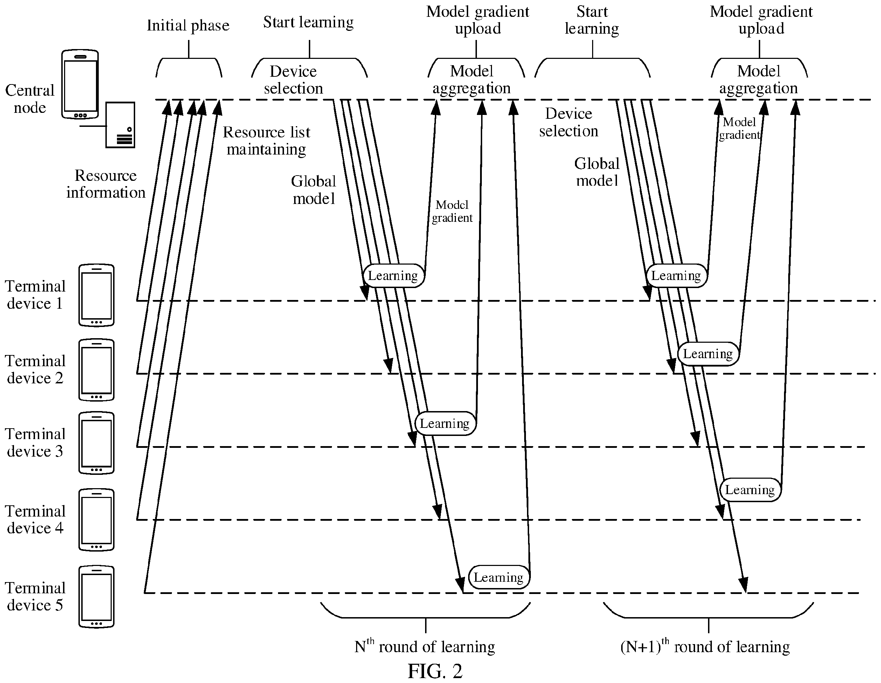

FIG. 2 shows a federated learning process based on the architecture shown in FIG. 1. In FIG. 2, an example in which a plurality of terminal devices are five terminal devices (that is, terminal device 1 to terminal device 5 in FIG. 2) is used. In an initial phase, the terminal devices may report resource information of the terminal devices to a central node. The central node may summarize the resource information of the plurality of terminal devices to select a terminal device participating in learning. The terminal device participating in learning may be one or more of the plurality of terminal devices. If a resource of a terminal device is updated in a model learning process, the terminal device reports an updated resource to the central node, so that the central node selects a more appropriate terminal device to participate in learning. Specifically, the central node may form a learning resource list based on the resource information reported by the plurality of terminal devices, that is, the learning resource list includes the resource information of the plurality of terminal devices. When a model needs to be learned, the central node determines, based on the learning resource list, a terminal device participating in learning. If a terminal device subsequently reports an updated resource, and the central node updates the learning resource list, it may also be considered that the central node maintains the learning resource list.

Before any round of learning, the central node determines a terminal device participating in learning, and broadcasts a global model and a model weight to the determined terminal device. Any terminal device participating in learning uses a received model weight as an initial weight of current learning, and learns, based on local service data, the global model from the central node, to obtain a local learning result, for example, a variation (also referred to as a model gradient) of a model parameter generated in a learning process. Terminal devices participating in learning send, to the central node, model gradients obtained through the current learning. The central node aggregates the global model based on the model gradients of the plurality of terminal devices, to complete one round of learning. That the central node aggregates the global model based on the model gradients of the plurality of terminal devices may also be understood as that the central node integrates (updates) the model weight. Then, a next round of learning is started. To be specific, the central node sends the aggregated global model to the terminal devices, and then the terminal devices learn the aggregated global model and send model gradients obtained through learning to the central node. The central node aggregates the aggregated global model based on the received model gradients. By analogy, learning is stopped until the model converges or a preset maximum quantity of learning times is reached. In different rounds of learning, terminal devices participating in learning may vary. For example, in an N^{th} round of training in FIG. 2, the terminal devices participating in learning may be terminal device 1, terminal device 3, and terminal device 5. In an (N+1)^{th} round of training, the terminal devices participating in learning are terminal device 1, terminal device 2, and terminal device 4. After the terminal device learns the received model based on the local service data, the central node aggregates models obtained by the plurality of terminal devices through learning, that is, the central node does not need to collect service data learning models of the plurality of terminal devices. Therefore, data is not shared among the terminal devices, and data security can be improved.

In the architecture shown in FIG. 1, if a terminal device is far away from the central node, that is, a communication link between the terminal device and the central node is long, an entire federated learning process also takes a long time. Therefore, it is proposed that an edge device first aggregates models learned by the plurality of terminal devices, and then the central node aggregates a model obtained by at least one edge device. The edge device is a device having a capability similar to that of the central node at the edge of the central node. For example, the edge device can aggregate a model obtained by a terminal device through learning. The edge device may be a device located on a communication link between the central node and the terminal device. Because a transmission link between the edge device and a terminal device is shorter than a transmission link between the central node and the terminal device, the time of the entire federated learning process can be reduced.

For example, a network device (for example, a base station) may be used as the edge device, and the network device in collaboration with a terminal device in a coverage area of the network device perform federated learning. A federated learning architecture that uses the network device as the edge device is also referred to as edge-based federated learning (Edge-based FL). In the following description, an example in which the edge device is the network device is used.

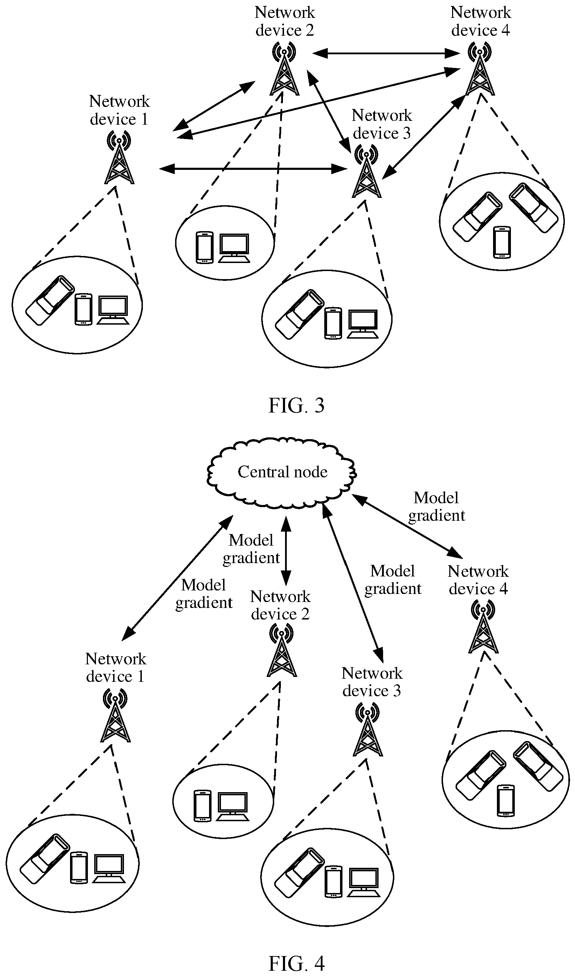

FIG. 3 is a diagram of an edge-based federated learning architecture. In FIG. 3, an example in which the edge-based federated learning architecture includes four edge devices (that is, network device 1 to network device 4) and a plurality of terminal devices is used. Every two of network device 1 to network device 4 may communicate with each other. There are a plurality of terminal devices in each of coverage areas of network device 1 to network device 4 (dashed lines in FIG. 4 indicate the coverage areas). Different network devices may have different quantities and/or types of terminal devices in coverage. Any network device may communicate with any terminal device in a coverage area of the network device. For any network device, the network device is equivalent to the central node in FIG. 1, and may collaborate with a terminal device in a coverage area of the network device to perform federated learning. After completing one round of learning, the network device may send an obtained model gradient (or model) to one or more neighboring network devices. Certainly, the network device may also receive a model gradient/model gradients sent by one or more network devices. Each network device may aggregate a model obtained through learning of the network device with a model from another network device, and use an aggregated model as a latest model. Then, each network device broadcasts the latest model to at least one terminal device in a coverage area of the network device, and collaborates with the at least one terminal device again to perform federated learning. By analogy, until the network device determines to stop learning.

In the architecture shown in FIG. 3, a network device cannot communicate with a network device that is far away from each other, and needs to forward a model or a model gradient through a network device located between the two network devices. To be specific, in an entire federated learning process, there are a large quantity of interactions between devices, and heavy communication traffic is generated. As a result, a model convergence time increases and convergence is slow in the federated learning process.

In addition, in consideration of that a coverage area of one network device is limited, that is, a quantity of terminal devices covered by one network device is limited, performance of a model obtained through federated learning of the network device in collaboration with a terminal device in a coverage area of the network device is limited. Therefore, different network devices may collaborate for federated learning. In this scenario, a central node may be introduced, and the central node may be configured to aggregate models obtained after learning of a plurality of network devices. An architecture in which the central node collaborates with a plurality of network devices to perform federated learning, and each network device collaborates with a terminal device in a coverage area of the network device to perform federated learning is also referred to as a hierarchical federated learning architecture.

FIG. 4 is a diagram of a hierarchical federated learning architecture. In FIG. 4, an example in which the hierarchical federated learning architecture includes one central node, four edge devices (that is, network device 1 to network device 4), and a plurality of terminal devices is used. In FIG. 4, it may be considered that one central node is added based on FIG. 3. A difference from FIG. 3 lies in that after the network devices perform federated learning in collaboration with terminal devices in coverage areas of the network devices, the network devices send, to the central node, model gradients obtained through learning. Then, the central node aggregates, based on the model gradients sent by the network devices, the model sent to the network devices. Subsequently, the central node broadcasts an aggregated model to the network devices, and the network devices perform federated learning again. The rest is deduced by analogy until the central node determines to stop learning.

In the architecture shown in FIG. 4, once the central node is faulty, federated learning cannot be implemented. In addition, the central node is responsible for aggregating models obtained by a plurality of network devices through learning, where a large quantity of network devices interact with the central node, raising a high requirement on computing resources and bandwidth resources of the central node. When the computing resource or the bandwidth resource of the central node is limited, model aggregation of a large quantity of network devices cannot be supported, that is, federated learning cannot be implemented.

To resolve the foregoing problem, in this embodiment of this application, edge devices participating in learning may be grouped. An edge device in any group completes aggregation of models obtained after learning of a plurality of edge devices in the group, and one edge device in the group sends an aggregated model to the central node. It can be learned that edge devices participating in learning are grouped, so that edge devices interacting with the central node are reduced, thereby reducing a load of the central node. In addition, in each round of learning, more edge devices may participate in learning, so that model convergence is faster, thereby reducing a quantity of learning times and improving learning efficiency.

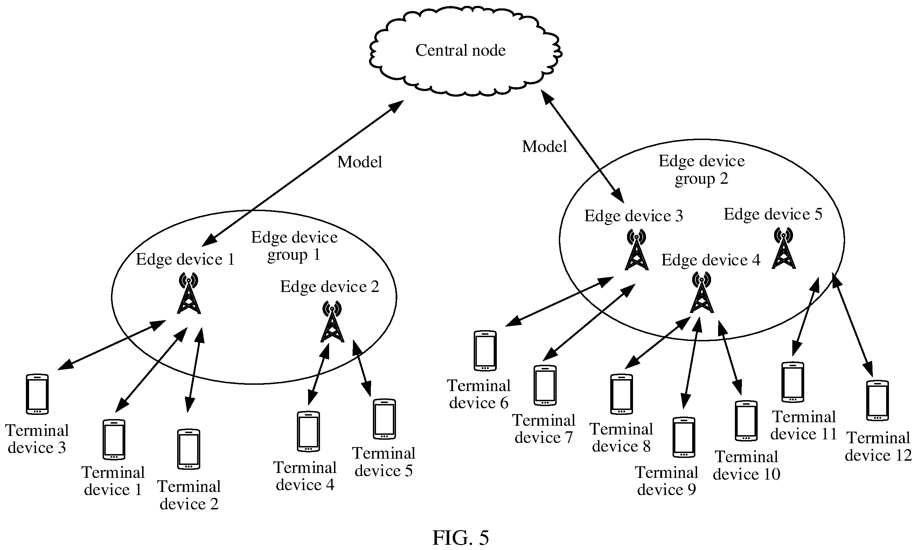

The following describes in detail the solutions provided in embodiments of this application with reference to the accompanying drawings. The technical solutions provided in embodiments of this application may be applied to a hierarchical federated learning architecture, for example, the architecture shown in FIG. 4. It should be noted that the hierarchical federated learning architecture in this embodiment of this application may include more edge devices or fewer edge devices, and each edge device may cover more or fewer terminal devices, as shown in FIG. 5. In FIG. 5, an example in which an edge device may be a network device is used, and an example in which one central node, five edge devices (edge device 1 to edge device 5) are included, and at least one terminal device is included in a coverage area of each edge device is used. For example, a coverage area of edge device 1 includes terminal device 1 to terminal device 3, and a coverage area of edge device 2 includes terminal device 4 to terminal device 5.

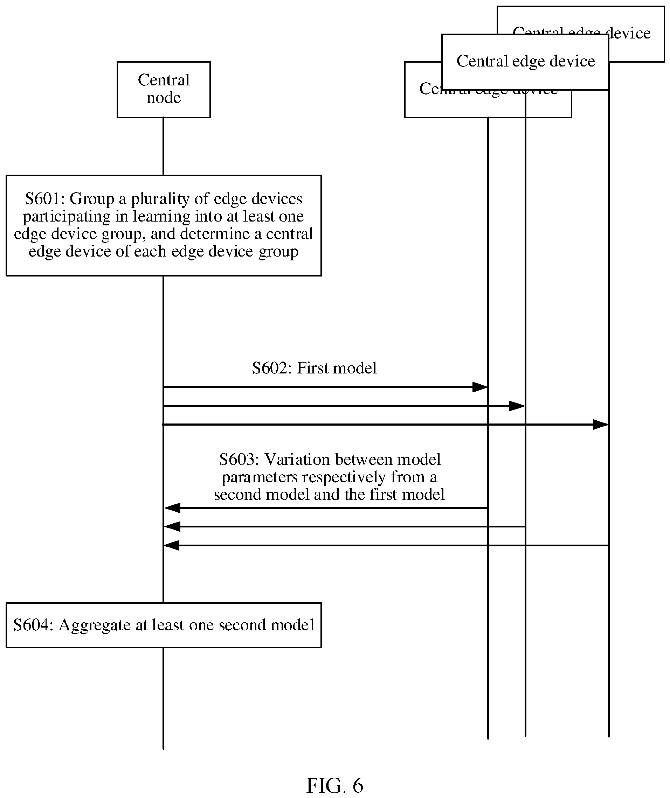

FIG. 6 is a schematic flowchart of federated learning according to an embodiment of this application. A process shown in FIG. 6 is a process of one round of model learning. It may be understood that any edge device may send resource information of the edge device to a central node, and the central node may receive resource information separately sent by a plurality of edge devices, and determine, based on the received plurality of pieces of resource information, an edge device participating in a current round of model learning.

S601: The central node groups a plurality of edge devices participating in learning into at least one edge device group, and determines a central edge device of each edge device group.

Before starting model learning, the central node may group the plurality of edge devices participating in learning, to obtain at least one edge device group. One edge device group includes at least one edge device, and any two edge devices in the at least one edge device may communicate with each other. To be specific, any edge device in an edge device group may communicate with another edge device in the group without participation of the central node. The plurality of edge devices are grouped, so that dependency on the central node may be reduced. In addition, the central node may further select one edge device as a representative from the at least one edge device in the edge device group, to communicate with the central node. For ease of description, in this embodiment of this application, an edge device that is in an edge device group and that communicates with the central node is referred to as a central edge device. Before each round of learning, the central node determines a plurality of edge devices participating in learning, groups the plurality of edge devices, and determines a central edge device of each edge device group. In different rounds of learning, the plurality of edge devices participating in learning may vary, and correspondingly, a quantity of edge device groups and edge devices included in each edge device group may vary. In different rounds of learning, the central edge device in each edge device group may also vary. How to determine a central edge device in each edge device group is subsequently described. First, how to group a plurality of edge devices is described.

A manner in which the central node groups the plurality of edge devices is not limited in this embodiment of this application. For example, the plurality of edge devices may be grouped in any one or more of the following grouping manners.

Grouping manner 1: the central node may group a plurality of edge devices into at least one edge device group based on a communication relationship (that is, first information in this embodiment of this application) among the plurality of edge devices.

The communication relationship may indicate an edge device that is in the plurality of edge devices and that can communicate with each edge device. To be specific, for any edge device, the communication relationship may indicate an edge device that can communicate with the edge device. Alternatively, the communication relationship may indicate whether every two of the plurality of edge devices can directly (or point-to-point) communicate with each other.

The example in FIG. 5 is still used. Edge devices participating in learning include edge device 1 to edge device 4. Edge device 1 and edge device 2 may communicate with each other, and any two of edge device 3, edge device 4, and edge device 5 may communicate with each other. However, a distance between edge device 1 and any edge device in edge device 3 to edge device 5 is too far for communication. Edge device 2 cannot communicate with any edge device in edge device 3 to edge device 5. The communication relationship may indicate edge device 2 that can communicate with edge device 1, edge device 1 that can communicate with edge device 2, edge device 4 and edge device 5 that can communicate with edge device 3, and the like. Before each round of learning, the central node may determine an edge device participate in learning. Edge devices participating in learning may vary in different rounds of learning. For example, in a first round of learning, there are four edge devices participating in learning; and in a second round of learning, there are five edge devices participating in learning. Before each round of learning, the central node may determine the first information, that is, determine a communication relationship among a plurality of edge devices participating in learning. The central node determines the communication relationship among the plurality of edge devices participating in learning in a plurality of manners, for example, including but not limited to the following two determining manners.

Determining manner 1: For any edge device participating in learning, the central node may instruct the edge device to report information about an edge device that can communicate with the edge device, so that the central node may obtain the information about an edge device, in a plurality of edge devices, that can directly communicate with the edge device, and further determine the communication relationship among the plurality of edge devices participating in learning. For ease of description, the following uses a first edge device participating in learning as an example to describe how the central node determines the communication relationship among the plurality of edge devices participating in learning.

For the first edge device, the central node may send an obtaining instruction to the first edge device, where the obtaining instruction is used to instruct the first edge device to report information about an edge device that is able to communicate with the first edge device. The first edge device receives the obtaining instruction, and sends, to the central node, the information about the edge device that can directly communicate with the first edge device. Similarly, any edge device receives the obtaining instruction sent by the central node, and sends, to the central node, information about an edge device that can directly communicate with the edge device. For ease of description, the information about an edge device that directly communicates with another edge device is referred to as fourth information. In this case, the central node may receive a plurality of pieces of fourth information, to determine, based on the plurality of pieces of fourth information, the communication relationship among the plurality of edge devices participating in learning.

Determining manner 2: For any edge device, information about an edge device that can directly communicate with the edge device may be preconfigured. To be specific, each edge device stores configuration information of an edge device that can directly communicate with the edge device. The central node obtains pieces of configuration information of the plurality of edge devices participating in learning, and may determine the communication relationship among the plurality of edges based on the obtained plurality of pieces of configuration information.

After determining the communication relationship among the plurality of edge devices participating in learning, the central node groups at least one of the plurality of edge devices into one group based on the communication relationship. As shown in FIG. 5, edge device 1 and edge device 2 are in one group, and edge device 3, edge device 4, and edge device 5 are in one group.

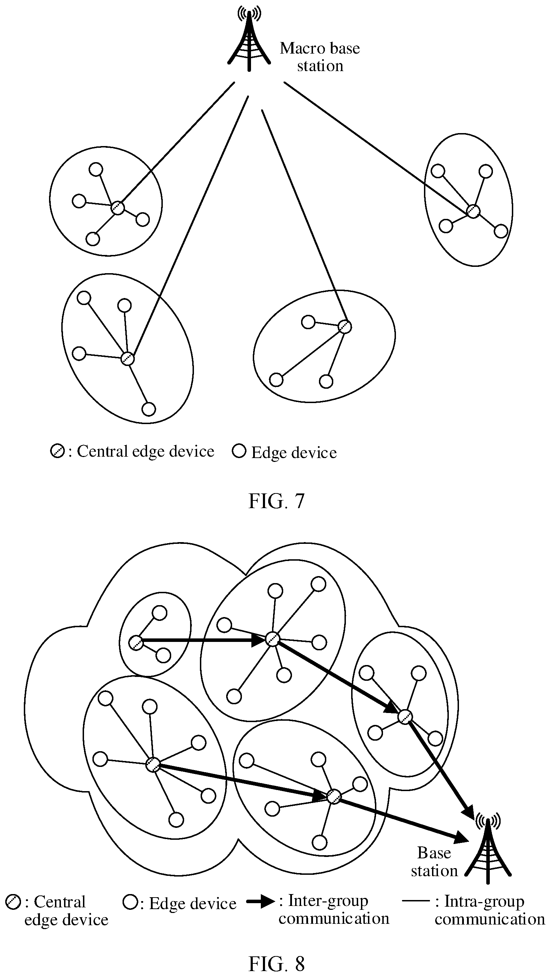

In a possible scenario, the plurality of edge devices are naturally grouped. For example, FIG. 7 is a diagram of natural grouping of a plurality of edge devices. The edge device is a micro base station. It may be understood that, one macro base station may be connected to a plurality of micro base stations, and a plurality of micro base stations connected to a same macro base station form a group. That is, the plurality of edge devices are naturally grouped. In this case, at least one group obtained by grouping the plurality of edge devices may be an antenna group of the plurality of edge devices.

If the communication relationship among the plurality of edge devices is not natural grouping, the central node may group the plurality of edge devices based on the communication relationship among the plurality of edge devices. For example, FIG. 8 is a diagram of grouping a plurality of edge devices based on communication delays. Both a cluster member node and a cluster head node in FIG. 8 are edge devices, where the cluster head node is a central edge device. In other words, a plurality of edge devices may be abstracted into a plurality of nodes, and are distributed in one graph (for example, referred to as a first graph). Grouping the plurality of edge devices is equivalent to performing image segmentation on the first graph to obtain a plurality of subgraphs. Edge devices corresponding to nodes in each subgraph belong to one group. A specific image segmentation manner used to group the plurality of edge devices is not limited in this embodiment of this application. For example, image segmentation is performed on the first graph by using a hierarchical segmentation algorithm (for example, a metis algorithm).

Grouping manner 2: the central node may group a plurality of edge devices into at least one edge device group based on a communication delay (that is, second information in this specification) of a communication link of each of the plurality of edge devices.

It may be understood that if a communication delay of a communication link between two edge devices is short, it may be considered that a distance between the two edge devices is short. In this case, communication costs of the two edge devices are low. On the contrary, if a communication delay of a communication link between two edge devices is long, it may be considered that a distance between the two edge devices is long, and communication costs of the two edge devices are high, or even the two edge devices cannot communicate with each other. For example, if a communication delay of a communication link between two edge devices exceeds preset duration, it may be considered that the two edge devices cannot communicate with each other. In this embodiment of this application, the central node may group a plurality of edge devices into one group based on a requirement of low communication costs, so that the plurality of edge devices can be grouped, and low communication costs can be ensured as much as possible. For example, statistics may be collected on communication delays between every two edge devices in each round. The central node obtains communication delays between every two edge devices in a plurality of edge devices participating in this round of learning, and then groups the plurality of edge devices based on the obtained communication delays.

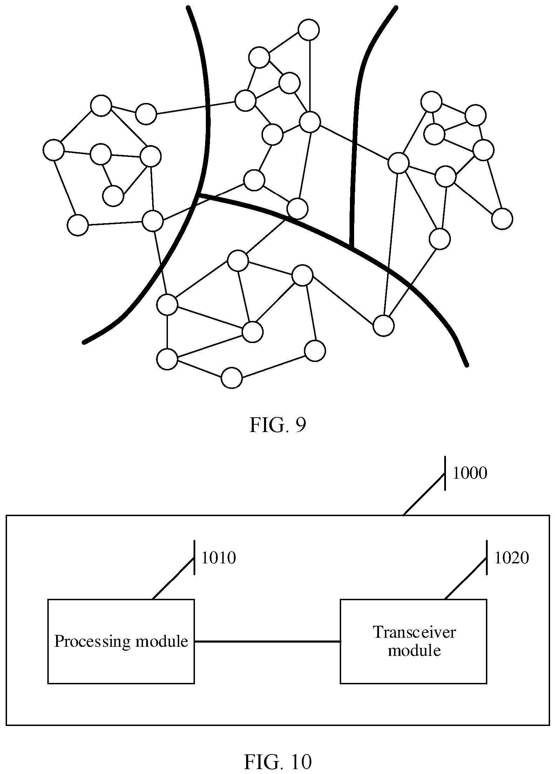

For example, FIG. 9 is a diagram of a communication relationship among a plurality of edge devices. The plurality of edge devices may be abstracted into a plurality of nodes, and are distributed in one graph (for example, referred to as a second graph), and the second graph is segmented. For example, during specific grouping, communication delays of communication links between different edge devices are used as weights, an optimization objective is set to a minimum intra-group communication cost, and image segmentation is performed on the second graph by using the hierarchical segmentation algorithm (for example, the metis algorithm). As shown in FIG. 9, a thick line in FIG. 9 represents a boundary of segmentation. Correspondingly, in FIG. 9, four groups are used as an example.

Grouping manner 3: the central node may group a plurality of edge devices into at least one edge device group based on a model similarity (that is, third information in this specification) among the plurality of edge devices.

A model similarity between two edge devices is a similarity between models obtained after the two edge devices separately learn a same model by using sample data. The central node may group the plurality of edge devices into at least one edge device group based on a model similarity among the plurality of edge devices. Because a plurality of edge devices with similar models are grouped into one group, a difference between models obtained after learning of the plurality of edge devices in the group is small, which helps accelerate aggregation of the plurality of models in the group.

For example, the central node may send a same model and same sample data to the plurality of edge devices, and each of the plurality of edge devices receives the model and the sample data from the central node, and learns the model by using the sample data. Each edge device sends a learned model to the central node, so that the central node receives learned models sent by the plurality of edge devices. Subsequently, the central node calculates similarities between models of every two edge devices, and groups the plurality of edge devices based on the obtained similarities.

The central node may group the plurality of edge devices by using any one of grouping manner 1 to grouping manner 3, or may group the plurality of edge devices by using a plurality of grouping manners from grouping manner 1 to grouping manner 3.

For example, the central node groups the plurality of edge devices based on the first information, to obtain M edge device groups, where M is an integer greater than or equal to 1; and then the central node groups each of the M edge device groups based on the third information, to obtain at least one edge device group. To be specific, the central node groups the plurality of edge devices by using grouping manner 1 and grouping manner 3. The central node groups the plurality of edge device groups into M edge device groups based on the communication relationship among the plurality of edge devices, and further groups the M edge device groups based on the model similarities between every two edge devices. The example in FIG. 5 is still used, edge device 1 to edge device 5 are naturally grouped into edge device group 1 and edge device group 2. The central node may further group edge device 3 and edge device 4 in edge device group 2 into one group based on the model similarity between every two edge devices, and group edge device 5 into one group.

For another example, the central node groups the plurality of edge devices based on the second information, to obtain M edge device groups, where M is an integer greater than or equal to 1; and then the central node groups each of the M edge device groups based on the third information, to obtain at least one edge device group. To be specific, the central node groups the plurality of edge devices by using grouping manner 2 and grouping manner 3. The central node groups the plurality of edge devices into M edge device groups based on communication delays of communication links between every two edge devices, and further groups the M edge device groups based on the model similarities between every two edge devices.

The central node groups the plurality of edge devices into at least one edge device group, and further needs to determine a central edge device in each edge device group. A specific manner of determining the central edge device is not limited in this embodiment of this application. For example, for any edge device group, the central node may randomly select an edge device from the edge device group as the central edge device. For example, the central node may determine the central edge device based on a service load of each edge device in the edge device group. For example, the central node selects an edge device with a lightest service load in the edge device group as the central edge device. For another example, the central node selects, from the edge device group, any edge device whose service load is less than a threshold as the central edge device. For example, the central node may determine the central edge device based on a communication delay between each edge device in the edge device group and the central node. For example, the central node selects, from the edge device group, an edge device with a shortest delay in communicating with the central node as the central edge device. For another example, the central node selects, from the edge device group, any edge device whose delay in communicating with the central node is less than a threshold as the central edge device.

The central node interacts with the central edge device group in the edge devices. For example, an edge device in any group completes aggregation of models obtained after learning of a plurality of edge devices in the group, and one edge device in the group sends an aggregated model to the central node. In this way, edge devices interacting with the central node are reduced, thereby reducing a load of the central node. In addition, in each round of learning, more edge devices may participate in learning, so that model convergence is faster, thereby reducing a quantity of learning times and improving federated learning efficiency.

S602: The central node separately sends a first model to at least one central edge device.

The first model may be considered as a model on which federated learning needs to be performed, and is also referred to as a global model. When the first model needs to be learned, the central node may separately send the first model to the at least one central edge device, and each central edge device broadcasts the first model in a group. In this way, each edge device in any edge device group can receive the first model. To be specific, the central node may separately send the first model to each edge device in the at least one edge device group by using the at least one central edge device. After receiving the first model, any edge device in any edge device group may collaborate with at least one terminal device in a coverage area to perform federated learning on the first model based on local data, until the model converges or a quantity of training times is reached, to obtain a learned model (for example, referred to as a third model). For a process in which the edge device collaborates with the at least one edge device in the coverage area of the edge device to perform federated learning on the first model, refer to content of the architecture shown in FIG. 3. Details are not described herein again.

The central node may aggregate third models obtained by the edge devices, to complete one round of model learning. In this embodiment of this application, a plurality of third models may be aggregated in a group, or a plurality of third models may be aggregated between groups. That a plurality of third models are aggregated in a group indicates that for any edge device group, one edge device in the edge device group may aggregate third models in the edge device group. That a plurality of third models are aggregated between groups indicates that third models aggregated by an edge device in an edge device group includes a third model in the edge device group and a third model that does not belong to the edge device group. For ease of description, in this embodiment of this application, a model obtained by aggregating a plurality of third models is referred to as a second model. In a case that a plurality of third models are aggregated in a group, the plurality of third models may be aggregated by using any edge device in the group. The following uses a first edge device group as an example to describe how to aggregate a plurality of third models in a group. A central edge device of the first edge device group is the first edge device.

In an example, after obtaining the third model, an edge device other than the first edge device in the first edge device group may send the obtained third model to the first edge device. The first edge device receives a plurality of third models, and aggregates the plurality of third models to obtain the second model.

The another edge device may directly send the third model to the first edge device, or may forward the third model to the first edge device by using an edge device in the first edge device group. For example, a second edge device in the first edge device group may directly send the third model to the first edge device, or may forward the third model to the first edge device by using a third edge device in the first edge device group. For another example, the second edge device in the first edge device group may also send the third model to the first edge device by using a terminal device. In this case, the terminal device may locally store information about a plurality of edge devices. When the terminal device moves from a coverage area of the second edge device to a coverage area of the first edge device, the terminal device sends the third model from the second edge device to the first edge device.

In another example, an edge device other than the first edge device in the first edge device group may aggregate a plurality of third models in the first edge device group. For example, the second edge device in the first edge device group obtains a third model, and may send the third model to the third edge device in the first edge device group. Similarly, an edge device other than the third edge device in the first edge device group also sends an obtained third model to the third edge device. The third edge device receives a plurality of third models, and aggregates the plurality of third models with a third model obtained by the third edge device, to obtain the second model. In this case, the third edge device sends the second model to the first edge device, so that the first edge device sends the second model to the central node.

In a case that a plurality of third models are aggregated between groups, any edge device in the first edge device group may aggregate a plurality of received third models, and the plurality of third models may include a third model in the first edge device group and a third model in an edge device group other than the first edge device group. For example, any edge device in the first edge device group may aggregate at least one third model in the first edge device group with at least one third model in the second edge device group. For example, a third edge device in the second edge device group may send an obtained third model to any terminal device covered by the third edge device. Due to mobility of the terminal device, when the terminal device moves to a coverage area of any edge device (for example, a fourth edge device) in the first edge device group, the terminal device may send the third model from the third edge device to the fourth edge device. After receiving the third model from the third edge device, the fourth edge device forwards the third model to the first edge device, and the first edge device aggregates the third model with received another model. Alternatively, after receiving the third model from the third edge device, the fourth edge device aggregates the third model with a third model obtained by the fourth edge device through learning. After aggregating the third models, the fourth edge device may send an aggregated third model to the first edge device, and the first edge device further aggregates the received third model with a third model obtained by the first edge device in collaboration with at least one terminal device in a coverage area of the first edge device through learning the first model based on local data.

S603: The at least one central edge device separately sends the second model to the central node.

After obtaining the second model, a central edge device in each edge device group sends the second model to the central node. To be specific, the central node may receive at least one second model by using the at least one edge device center. Alternatively, a central edge device in each edge device group may send a variation (that is, a model gradient) between model parameters respectively from the second model and the first model to the central node. It should be understood that one second model corresponds to one model gradient. The central node may receive at least one model gradient from the at least one central edge device.

S604: The central node aggregates the at least one second model.

The at least one central edge device separately sends the second model to the central node, and the central node may receive the at least one second model. The central node aggregates the at least one second model to obtain a fourth model. The fourth model is a model obtained in a current round of federated learning. In a next round of learning, the central node sends the fourth model to the central edge device of each edge device group. A central edge device in any edge device group broadcasts the fourth model, so that each edge device included in any edge device group receives the fourth model. Any edge device collaborates with a terminal device in a coverage area to perform federated learning on the fourth model. A next-round learning process is the same as a current-round learning process until the model converges or a preset quantity of learning rounds is reached.

FIG. 5 is used as an example. In an N^{th} round of learning, the central node sends the first model to edge device 1 in edge device group 1, and sends the first model to edge device 3 in edge device group 2. It is assumed that edge device 1 is a central edge device of edge device group 1, and edge device 3 is a central edge device of edge device group 2. After receiving the first model, edge device 1 broadcasts the first model in edge device group 1, so that edge device 2 and terminal device 1 to terminal device 3 covered by edge device 1 may also obtain the first model. Similarly, after receiving the first model, edge device 3 broadcasts the first model in edge device group 2, so that edge device 4, edge device 5, and terminal device 6 to terminal device 7 covered by edge device 3 may also obtain the first model. After obtaining the first model, edge device 2, edge device 4, and edge device 5 continue to broadcast the first model. In this way, all terminal devices in coverage areas of edge device 2, edge device 4, and edge device 5 may obtain the first model. Each edge device collaborates with at least one terminal device covered by the edge device to learn the first model based on local data, to obtain the third model. For example, edge device 1 collaborates with terminal device 1 to terminal device 3 to learn the first model based on the local data, to obtain third models.

After obtaining the third model, each edge device may aggregate a plurality of third models in the group to obtain a second model, and then the central edge device sends the second model to the central node. Edge device group 1 is used as an example. Edge device 2 may send an obtained third model to edge device 1. Edge device 1 aggregates the third model with the third models obtained by edge device 1 in collaboration with terminal device 1 to terminal device 3 in a coverage area of edge device 1 through training, to obtain the second model. Edge device 1 serves as a central edge node, and then sends the third model finally obtained in edge device group 1 through training to the central node. Alternatively, a plurality of third models from a plurality of groups may be aggregated to obtain a second model, and then the central edge device sends the second model to the central node. For example, edge device 3 may send an obtained third model to terminal device 6. When terminal device 6 moves to the coverage area of edge device 1, terminal device 6 sends, to edge device 1, the third model obtained through training in edge device group 2. Edge device 1 may aggregate the third model received from terminal device 6 and the third model from edge device 2 with the third models obtained by edge device 1 in collaboration with terminal device 1 to terminal device 3 through training, to obtain a second model, and then send the second model to the central node.

A process in which edge device 3 serves as the central edge device to obtain the second model and reports the second model to the central node is similar to the foregoing process in which edge device 1 obtains the second model and reports the second model to the central node. Details are not described again. Therefore, the central node may receive the second model from edge device 1 and the second model from edge device 3, and aggregate the second model from edge device 1 with the second model from edge device 3 to obtain the fourth model. If the fourth model does not converge, or the predetermined quantity of learning rounds is greater than N, an (N+1)^{th} round of learning similar to the foregoing N^{th} round of learning continues.

Similar to the N^{th} round of learning, in the (N+1)^{th} round of learning, the central node separately sends, to edge device 1 and edge device 3, the model obtained after the N^{th} round of learning, that is, the fourth model. Edge device 1 receives the fourth model and broadcasts the fourth model. Similarly, edge device 3 receives the fourth model and broadcasts the fourth model. Subsequently, a process of the (N+1)^{th} round of learning is similar to that of the N^{th} round of learning, and details are not described herein again. The learning ends until a model finally obtained through training converges or the preset quantity of learning rounds is reached.

In this embodiment of this application, edge devices participating in learning are grouped, so that edge devices interacting with the central node are reduced, thereby reducing a load of the central node. In addition, in each round of learning, more edge devices may participate in learning, so that model convergence is faster, thereby improving learning efficiency.

In the foregoing embodiment provided in this application, interaction between the central node, the first edge device, and the terminal device is used to describe the method provided in embodiments of this application. To implement functions in the foregoing methods provided in embodiments of this application, each of the central node, the first edge device, and the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, communication apparatuses configured to implement the foregoing method in embodiments of this application.

FIG. 10 is a schematic block diagram of a communication apparatus 1000 according to an embodiment of this application. The communication apparatus 1000 may include a processing module 1010 and a transceiver module 1020. Optionally, a storage unit may be included. The storage unit may be configured to store instructions (code or a program) and/or data. The processing module 1010 and the transceiver module 1020 may be coupled to the storage unit. For example, the processing module 1010 may read the instructions (the code or the program) and/or the data in the storage unit, to implement a corresponding method. The foregoing modules may be disposed independently, or may be partially or completely integrated.

In some possible implementations, the communication apparatus 1000 can correspondingly implement behavior and functions of a central node in the foregoing method embodiments. The communication apparatus 1000 may be a central node, or may be a component (for example, a chip or a circuit) used in the central node, or may be a chip or a chip group in the central node, or a part of a chip that is configured to perform a related method function.

For example, the transceiver module 1020 is configured to: separately send a first model to at least one central edge device and receive at least one second model, where the at least one central edge device is in one-to-one correspondence with at least one edge device group, one edge device group includes at least one edge device, the second model is obtained by aggregating a third model respectively obtained by each edge device in at least one edge device group, and the third model is a model obtained by one edge device in collaboration with at least one terminal device in a coverage area through learning the first model based on local data; and the processing module 1010 is configured to aggregate the at least one second model to obtain a fourth model.

In a possible implementation, the processing module 1010 is further configured to: group a plurality of edge devices participating in learning into the at least one edge device group, and determine a central edge device of each edge device group based on one or more types of the following information: first information, second information, or third information. The first information indicates a communication relationship among the plurality of edge devices, where the communication relationship indicates an edge device that is in the plurality of edge devices and that is able to communicate with each edge device. The second information indicates a communication delay of a communication link of each of the plurality of edge devices. The third information indicates a model similarity among the plurality of edge devices.

In an optional implementation, when grouping the plurality of edge devices participating in learning into the at least one edge device group based on the one or more types of information, the processing module 1010 is specifically configured to: group the plurality of edge devices based on the first information or the second information, to obtain M edge device groups, where M is an integer greater than or equal to 1; and group each of the M edge device groups based on the third information, to obtain the at least one edge device group.

In an optional implementation, the transceiver module 1020 is further configured to: send, for a first edge device in the plurality of edge devices, an obtaining instruction to the first edge device, and receive fourth information from the first edge device, where the obtaining instruction is used to instruct the first edge device to report information about an edge device that is able to communicate with the first edge device, and the fourth information includes the information about the edge device that is able to communicate with the first edge device; and the processing module 1010 is further configured to determine the communication relationship among the plurality of edge devices based on fourth information that is separately from the plurality of edge devices.

In an optional implementation, the processing module 1010 is further configured to: separately obtain configuration information from the plurality of edge devices, where configuration information of one of the plurality of edge devices includes information about another edge device that is able to communicate with the edge device; and determine the communication relationship among the plurality of edge devices based on the obtained configuration information.

In some possible implementations, the communication apparatus 1000 can correspondingly implement behavior and functions of the first edge device in the foregoing method embodiments. The communication apparatus 1000 may be a base station, or may be a component (for example, a chip or a circuit) used in the base station, or may be a chip or a chip group in the base station, or a part of a chip that is configured to perform a related method function.

For example, the transceiver module 1020 is configured to: receive a first model from a central node, and send the first model to an edge device other than the communication apparatus in a first edge device group, where the communication apparatus 1000 is a central edge device in the first edge device group, and the first edge device group includes at least one edge device. The processing module 1010 is configured to determine a second model, where the second model is obtained by aggregating a third model respectively obtained by each edge device in at least one edge device group. The at least one edge device group includes the first edge device group, and the third model is a model obtained by one edge device in collaboration with at least one terminal device in a coverage area through learning the first model based on local data. The transceiver module 1020 is further configured to send the second model to the central node.

In an optional implementation, the transceiver module 1020 is further configured to receive at least one third model, where one of the at least one third model comes from a second edge device in the first edge device group or a first terminal device. The first terminal device is a terminal device that moves from a coverage area of an edge device in a second edge device group to a coverage area of the communication apparatus 1000. The processing module 1010 is further configured to aggregate the at least one third model with a third model that is obtained by the communication apparatus 1000 in collaboration with at least one terminal device covered by the communication apparatus 1000 through learning the first model based on local data, to obtain the second model.

In an optional implementation, the transceiver module 1020 is further configured to receive an obtaining instruction sent by the central node, and sends fourth information to the central node. The obtaining instruction is used to instruct the communication apparatus 1000 to report information about an edge device that is able to communicate with the communication apparatus 1000. The fourth information includes the information about the edge device that is able to communicate with the communication apparatus 1000.

In some possible implementations, the communication apparatus 1000 can correspondingly implement behavior and functions of a first terminal device in the foregoing method embodiments. The communication apparatus 1000 may be a terminal device, or may be a component (for example, a chip or a circuit) used in the terminal device, or may be a chip or a chip group in the terminal device, or a part of a chip that is configured to perform a related method function.

For example, the transceiver module 1020 is configured to receive a third model from a second edge device in a first edge device group, where the third model is a model obtained by the second edge device in collaboration with at least one terminal device in a coverage area through learning a first model from a central node based on local data, and the communication apparatus 1000 belongs to the at least one terminal device. The processing module 1010 is configured to: when it is determined that the communication apparatus moves from the coverage area of the second edge device to a coverage area of a third edge device in a second edge device group, control the transceiver module 1020 to send the third model to the third edge device.

It should be understood that in this embodiment of this application, the processing module 1010 may be implemented by a processor or a processor-related circuit component, and the transceiver module 1020 may be implemented by a transceiver, a transceiver-related circuit component, or a communication interface.

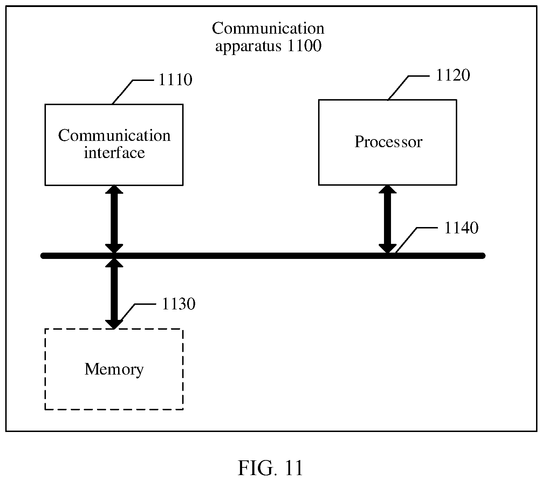

FIG. 11 is a schematic block diagram of a communication apparatus 1100 according to an embodiment of this application. The communication apparatus 1100 may be a central node, and can implement a function of the central node in the method provided in embodiments of this application. Alternatively, the communication apparatus 1100 may be an apparatus that can support the central node in implementing a corresponding function in the method provided in embodiments of this application. The communication apparatus 1100 may be a chip system. In this embodiment of this application, the chip system may include a chip, or may include a chip and another discrete component. For a specific function, refer to the descriptions in the foregoing method embodiments. The communication apparatus 1100 may be an edge device, for example, a base station, and can implement a function of a first edge device in the method provided in embodiments of this application. Alternatively, the communication apparatus 1100 may be an apparatus that can support the first edge device in implementing a corresponding function in the method provided in embodiments of this application. The communication apparatus 1100 may be a chip system. In this embodiment of this application, the chip system may include a chip, or may include a chip and another discrete component. For a specific function, refer to the descriptions in the foregoing method embodiments. The communication apparatus 1100 may be a terminal device, and can implement a function of the terminal device in the method provided in embodiments of this application. Alternatively, the communication apparatus 1100 may be an apparatus that can support the terminal device in implementing a corresponding function in the method provided in embodiments of this application. The communication apparatus 1100 may be a chip system. In this embodiment of this application, the chip system may include a chip, or may include a chip and another discrete component. For a specific function, refer to the descriptions in the foregoing method embodiments.

The communication apparatus 1100 includes one or more processors 1120, and may be configured to implement or support the communication apparatus 1100 in implementing the function of the central node in the method provided in embodiments of this application. For details, refer to the detailed descriptions in the method examples. Details are not described herein again. The one or more processors 1120 may alternatively be configured to implement or support the communication apparatus 1100 in implementing the function of the first edge device in the method provided in embodiments of this application. The one or more processors 1120 may alternatively be configured to implement or support the communication apparatus 1100 in implementing the function of the terminal device in the method provided in embodiments of this application. For details, refer to the detailed descriptions in the method examples. Details are not described herein again. The processor 1120 may also be referred to as a processing unit or a processing module, and may implement a specific control function. The processor 1120 may be a general-purpose processor, a dedicated processor, or the like. For example, the processor includes a central processing unit, an application processor, a modem processor, a graphics processor, an image signal processor, a digital signal processor, a video codec processor, a controller, a memory, and/or a neural network processor. The central processing unit may be configured to control the communication apparatus 1100, execute a software program, and/or process data. Different processors may be independent components, or may be integrated into one or more processors, for example, integrated into one or more application-specific integrated circuits.

Optionally, the communication apparatus 1100 includes one or more memories 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions and/or data stored in the memory 1130, to enable the communication apparatus 1100 to implement a corresponding method. At least one of the at least one memory may be included in the processor 1120.

The communication apparatus 1100 may further include a communication interface 1110, and is configured to communicate with another device or communication network, such as a radio access network (radio access network, RAN), a wireless local area network (wireless local area network, WLAN), or a wired access network by using any apparatus such as a transceiver. The communication interface 1110 is configured to communicate with another device by using a transmission medium, so that an apparatus in the communication apparatus 1100 may communicate with the another device. For example, when the communication apparatus 1100 is the central node, the another device is the edge device; or when the communication apparatus is the edge device, the another device is the central node or the terminal device. The processor 1120 may receive and send data through the communication interface 1110. The communication interface 1110 may be specifically a transceiver.

A specific connection medium between the communication interface 1110, the processor 1120, and the memory 1130 is not limited in this embodiment of this application. In this embodiment of this application, the memory 1130, the processor 1120, and the communication interface 1110 are connected to each other by using a bus 1140 in FIG. 11. The bus is represented by using a thick line in FIG. 11. This is merely an example for description, and is not used as a limitation. Another component connection manner may be alternatively used. The bus may be classified into an address bus, a data bus, a control bus, and the like. For ease of representation, only one thick line is used to represent the bus in FIG. 11, but this does not mean that there is only one bus or only one type of bus.

In this embodiment of this application, the processor 1120 may be a general purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general purpose processor may be a microprocessor, any conventional processor, or the like. The steps of the method disclosed with reference to embodiments of this application may be directly performed by a hardware processor, or may be performed by using a combination of hardware in the processor and a software module.

The memory 1130 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage and optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory 1130 is not limited thereto. The memory may exist independently, and is connected to the processor by using a communication bus 1140. The memory may alternatively be integrated with the processor

The memory 1130 is configured to store computer-executable instructions for performing the solutions in this application, and the processor 1120 controls the execution. The processor 1120 is configured to execute the computer-executable instructions stored in the memory 1130, to implement the federated learning method provided in the foregoing embodiments of this application.

Optionally, the computer-executable instructions in this embodiment of this application may also be referred to as application program code. This is not specifically limited in this embodiment of this application.

It may be understood that the processing module in the foregoing embodiment may be a processor, for example, a central processing module (central processing unit, CPU). The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one central node, at least one edge device, and at least one terminal device. For example, the communication system includes a central node, a first edge device, and at least one terminal device that are used for related functions in the foregoing embodiments. For details, refer to the related descriptions in the method embodiments. Details are not described herein again.

An embodiment of this application further provides a computer-readable storage medium, including instructions. When the instructions are run on a computer, the computer is enabled to perform the method performed by the central node in embodiments of this application. Alternatively, when the instructions are run on a computer, the computer is enabled to perform the method performed by the first edge device in embodiments of this application. Alternatively, when the instructions are run on a computer, the computer is enabled to perform the method performed by the terminal device in embodiments of this application.

An embodiment of this application further provides a computer program product, including instructions. When the instructions are run on a computer, the computer is enabled to perform the method performed by the central node in embodiments of this application. Alternatively, when the instructions are run on a computer, the computer is enabled to perform the method performed by the first edge device in embodiments of this application. Alternatively, when the instructions are run on a computer, the computer is enabled to perform the method performed by the terminal device in embodiments of this application.

An embodiment of this application provides a chip system. The chip system includes a processor, and may further include a memory, configured to implement a function of the central node in the foregoing method, or configured to implement a function of the first edge device in the foregoing method, or configured to implement a function of the terminal device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps), this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A federated learning method, comprising:
separately sending, by a central node, a first model to at least one central edge device, wherein the at least one central edge device is in one-to-one correspondence with at least one edge device group, and one edge device group comprises at least one edge device;
receiving, by the central node, at least one second model, wherein the second model is obtained by aggregating a third model respectively obtained by each edge device in at least one edge device group, and the third model is a model obtained by one edge device in collaboration with at least one terminal device in a coverage area through learning the first model based on local data; and
aggregating, by the central node, the at least one second model to obtain a fourth model.

2. The method according to claim 1, wherein the method further comprises:
grouping, by the central node, a plurality of edge devices participating in learning into the at least one edge device group, and determining a central edge device of each edge device group based on one or more types of the following information:
first information, indicating a communication relationship among the plurality of edge devices, wherein the communication relationship indicates an edge device that is in the plurality of edge devices and that is able to communicate with each edge device;
second information, indicating a communication delay of a communication link of each of the plurality of edge devices; and
third information, indicating a model similarity among the plurality of edge devices.

3. The method according to claim 2, wherein the grouping, by the central node, a plurality of edge devices participating in learning into the at least one edge device group based on one or more types of the following information comprises:
grouping, by the central node, the plurality of edge devices based on the first information or the second information, to obtain M edge device groups, wherein M is an integer greater than or equal to 1; and
grouping, by the central node, each of the M edge device groups based on the third information, to obtain the at least one edge device group.

4. The method according to claim 2 or 3, wherein the method further comprises:
sending, by the central node for a first edge device in the plurality of edge devices, an obtaining instruction to the first edge device, wherein the obtaining instruction is used to instruct the first edge device to report information about an edge device that is able to communicate with the first edge device;
receiving, by the central node, fourth information from the first edge device, wherein the fourth information comprises the information about the edge device that is able to communicate with the first edge device, and the first edge device is any edge device in the plurality of edge devices; and
determining, by the central node, the communication relationship among the plurality of edge devices based on fourth information that is separately from the plurality of edge devices.

5. The method according to claim 2 or 3, wherein the method further comprises:
separately reading, by the central node, configuration information from the plurality of edge devices, wherein configuration information of one of the plurality of edge devices comprises information about another edge device that is able to communicate with the edge device; and
determining, by the central node, the communication relationship among the plurality of edge devices based on the read configuration information.

6. A federated learning method, comprising:
receiving, by a first edge device, a first model from a central node, wherein the first edge device is a central edge device in a first edge device group, and the first edge device group comprises at least one edge device;
sending, by the first edge device, the first model to an edge device other than the first edge device in the first edge device group; and
sending, by the first edge device, a second model to the central node, wherein the second model is obtained by aggregating a third model respectively obtained by each edge device in at least one edge device group, the at least one edge device group comprises the first edge device group, and the third model is a model obtained by one edge device in collaboration with at least one terminal device in a coverage area through learning the first model based on local data.

7. The method according to claim 6, wherein the method further comprises:
receiving, by the first edge device, at least one third model, wherein one of the at least one third model comes from a second edge device in the first edge device group or a first terminal device, and the first terminal device is a terminal device that moves from a coverage area of an edge device in a second edge device group to a coverage area of the first edge device; and
aggregating, by the first edge device, the at least one third model with a third model that is obtained by the first edge device in collaboration with at least one terminal device covered by the first edge device through learning the first model based on local data, to obtain the second model.

8. The method according to claim 6, wherein the method further comprises:
receiving, by the first edge device, an obtaining instruction sent by the central node, wherein the obtaining instruction is used to instruct the first edge device to report information about an edge device that is able to communicate with the first edge device; and
sending, by the first edge device, fourth information to the central node, wherein the fourth information comprises the information about the edge device that is able to communicate with the first edge device.

9. A federated learning method, comprising:
receiving, by a first terminal device, a third model from a second edge device in a first edge device group, wherein the third model is a model obtained by the second edge device in collaboration with at least one terminal device in a coverage area through learning a first model from a central node based on local data, and the first terminal device is located within the coverage area of the second edge device; and
moving, by the first terminal device, from the coverage area of the second edge device to a coverage area of a third edge device in a second edge device group, and sending the third model to the third edge device.

10. A communication method, comprising:
separately sending, by a central node, a first model to at least one central edge device, wherein the at least one central edge device is in one-to-one correspondence with at least one edge device group, and one edge device group comprises at least one edge device;
receiving, by a first edge device in the at least one central edge device, the first model, and sending a second model to the central node, wherein the first edge device is a central edge device in a first edge device group, the first edge device group comprises at least one edge device, the second model is obtained by aggregating a third model respectively obtained by each edge device in at least one edge device group, the at least one edge device group comprises the first edge device group, and the third model is a model obtained by one edge device in collaboration with at least one terminal device in a coverage area through learning the first model based on local data; and
aggregating, by the central node, the received at least one second model to obtain a fourth model.

11. A communication apparatus, comprising a processing module and a transceiver module, wherein
the transceiver module is configured to: separately send a first model to at least one central edge device and receive at least one second model, wherein the at least one central edge device is in one-to-one correspondence with at least one edge device group, one edge device group comprises at least one edge device, the second model is obtained by aggregating a third model respectively obtained by each edge device in at least one edge device group, and the third model is a model obtained by one edge device in collaboration with at least one terminal device in a coverage area through learning the first model based on local data; and
the processing module is configured to aggregate the at least one second model to obtain a fourth model.

12. The communication apparatus according to claim 11, wherein the processing module is further configured to:
group a plurality of edge devices participating in learning into the at least one edge device group, and determine a central edge device of each edge device group based on one or more types of the following information:
first information, indicating a communication relationship among the plurality of edge devices, wherein the communication relationship indicates an edge device that is in the plurality of edge devices and that is able to communicate with each edge device;
second information, indicating a communication delay of a communication link of each of the plurality of edge devices; and
third information, indicating a model similarity among the plurality of edge devices.

13. The communication apparatus according to claim 12, wherein when grouping the plurality of edge devices participating in learning into the at least one edge device group based on the one or more types of information, the processing module is specifically configured to:
group the plurality of edge devices based on the first information or the second information, to obtain M edge device groups, wherein M is an integer greater than or equal to 1; and
group each of the M edge device groups based on the third information, to obtain the at least one edge device group

14. The communication apparatus according to claim 12 or 13, wherein the transceiver module is further configured to:
send, for a first edge device in the plurality of edge devices, an obtaining instruction to the first edge device, and receive fourth information from the first edge device, wherein the obtaining instruction is used to instruct the first edge device to report information about an edge device that is able to communicate with the first edge device, and the fourth information comprises the information about the edge device that is able to communicate with the first edge device; and
the processing module is further configured to determine the communication relationship among the plurality of edge devices based on fourth information that is separately from the plurality of edge devices.

15. The communication apparatus according to claim 12 or 13, wherein the processing module is further configured to:
separately obtain configuration information from the plurality of edge devices, wherein configuration information of one of the plurality of edge devices comprises information about another edge device that is able to communicate with the edge device; and
determine the communication relationship among the plurality of edge devices based on the obtained configuration information.

16. A communication apparatus, comprising a processing module and a transceiver module, wherein
the transceiver module is configured to: receive a first model from a central node, and send the first model to an edge device other than the communication apparatus in a first edge device group, wherein the communication apparatus is a central edge device in the first edge device group, and the first edge device group comprises at least one edge device;
the processing module is configured to determine a second model, wherein the second model is obtained by aggregating a third model respectively obtained by each edge device in at least one edge device group, the at least one edge device group comprises the first edge device group, and the third model is a model obtained by one edge device in collaboration with at least one terminal device in a coverage area through learning the first model based on local data; and
the transceiver module is further configured to send the second model to the central node.

17. The communication apparatus according to claim 16, wherein the transceiver module is further configured to receive at least one third model, wherein one of the at least one third model comes from a second edge device in the first edge device group or a first terminal device, and the first terminal device is a terminal device that moves from a coverage area of an edge device in a second edge device group to a coverage area of the communication apparatus; and
the processing module is further configured to aggregate the at least one third model with a third model that is obtained by the communication apparatus in collaboration with at least one terminal device covered by the communication apparatus through learning the first model based on local data, to obtain the second model.

18. The communication apparatus according to claim 16, wherein the transceiver module is further configured to:
receive an obtaining instruction sent by the central node, wherein the obtaining instruction is used to instruct the communication apparatus to report information about an edge device that is able to communicate with the communication apparatus; and
send fourth information to the central node, wherein the fourth information comprises the information about the edge device that is able to communicate with the communication apparatus.

19. A communication apparatus, comprising a processing module and a transceiver module, wherein
the transceiver module is configured to receive a third model from a second edge device in a first edge device group, wherein the third model is a model obtained by the second edge device in collaboration with at least one terminal device in a coverage area through learning a first model from a central node based on local data, and the communication apparatus belongs to the at least one terminal device; and
the processing module is configured to: when it is determined that the communication apparatus moves from the coverage area of the second edge device to a coverage area of a third edge device in a second edge device group, control the transceiver module to send the third model to the third edge device.

20. A communication apparatus, wherein the communication apparatus comprises a processor and a memory, the memory is configured to store a computer program, and the processor is configured to execute the computer program stored in the memory, so that the communication apparatus performs the method according to any one of claims 1 to 5, or the communication apparatus performs the method according to any one of claims 6 to 8, or the communication apparatus performs the method according to claim 9.

21. A communication system, comprising a central node and a plurality of edge devices, wherein the central node is configured to implement the method according to any one of claims 1 to 5, and any edge device in the plurality of edge devices is configured to implement the method according to any one of claims 6 to 8.

22. The system according to claim 21, wherein the system further comprises at least one terminal device, and any terminal device in the at least one terminal device is configured to implement the method according to claim 9.

23. A computer-readable storage medium, wherein the computer-readable storage medium stores a computer program, and when the computer program is executed by a computer, the computer performs the method according to any one of claims 1 to 5, or the computer performs the method according to any one of claims 6 to 8, or the computer performs the method according to claim 9.

24. A computer program product, wherein the computer program product stores a computer program, and when the computer program is executed by a computer, the computer is enabled to perform the method according to any one of claims 1 to 5, or the computer is enabled to perform the method according to any one of claims 6 to 8, or the computer is enabled to perform the method according to claim 9.
